# EUROPEAN PATENT APPLICATION

(11) **EP 2 762 266 A1**
(43) Date of publication of application: **06.08.2014**
(21) Application number: 11872581.1
(22) Date of filing: 22.09.2011
(51) Int. Cl.: B23Q 1/00

(54) **ARM AND MULTICOUPLER FOR AUTOMATIC CONNECTIONS TO MACHINING ACCESSORIES IN MACHINE-TOOLS**

(71) Applicant: GMTK Multi-Process Machining S.A., Zestoa (Guipúzcoa) (ES)
(72) Inventor: MANSO MARQUEZ, Jose Maria, E-20130 Urnieta (Guipuzcoa) (ES); ECEIZA AGOTE, Patxi, E-20800 Zarautz (Guipuzcoa) (ES)
(74) Representative: Carlos Hernando, Borja
(86) International application number: PCT/ES2011/070663
(87) International publication number: WO 2013/041738

(57) **Abstract**

Arm and multicoupler for automatic connections to machining accessories in lathes, referring to a device equipped with one single arm, built into the main machining spindle or axle of the machine tool, preferably a horizontal lathe, which incorporates all of the connections necessary for the various machining accessories or headpieces coupled to said main spindle and which are additional to the connections built into the spindle itself, such as extra coolant, electrical connections and hydraulic pressure, said connections being automatically coupled to a multicoupler built into each machining accessory or headpiece.

## Description

### Object of the invention

The present invention, an arm and multicoupler for automatic connections to machining accessories in machine tools, preferably horizontal lathes, refers to a device equipped with one single arm, built into the main machining spindle or axle of the lathe, which incorporates all the necessary connections for the various machining accessories or headpieces coupled to said main spindle, which also exist in addition to the connections built into the spindle itself, such as an extra coolant, electrical connections and hydraulic pressure, these connections being coupled automatically to a multicoupler built into each machining accessory or headpiece.

The application field of the present invention falls within the technical sector of the industry dedicated to manufacturing machine tools, as well as pieces of equipment and devices which serve to connect replaceable machining headpieces and accessories in machine tools.

### Invention background

In the state of the art, pieces of equipment for connecting machining accessories and headpieces in lathes usually require manual manipulation or, at best, have various automatic connection devices for various types of accessory and headpiece, which are usually separated depending on the type of connection required, extra coolant or an electronic, hydraulic or even mechanical connection to transmit movement. This means that when exchanging said accessories and headpieces on the main machining spindle of the lathe, it is necessary to incorporate a greater number of connection devices, either automatically or manually.

Horizontal lathes with an automatic arm to transmit movement to accessories and/or headpieces are known, as well as another, different arm to manually or automatically connect an extra coolant to accessories and/or headpieces, in addition to other connection to make manoeuvring hydraulic pressure available in accessories and/or headpieces coupled in the main machining spindle or axle of the lathe. These devices are independent from one another and are sometimes incompatible, being located at different locations in the lathe, which is why, when they are automatic, they require different conducts in order to couple and uncouple them.

Vertical lathes are also known which have an external connection from the main spindle to the headpiece or accessory which requires it, be it electrical or coolant, which makes some machining operations difficult or even limits the movements of said spindle, in addition to the fact that said connection is more exposed to projections of coolant and shavings resulting from ongoing machining operations. Some of these connections are permanent if they are not withdrawn by means of manual intervention, which results in a significant increase in time spent.

The above not only gives rise to higher costs by increasing the number of connecting devices and increasing the manual connection time of some accessories and headpieces in the main machining spindle but also makes the accessories and headpieces difficult to operate when they are automatic.

Therefore, one aim of the present invention is to add one single piece of connection equipment for machining headpieces and accessories used in lathes to the state of the art, in such a way that the advantages of the systems already known about will be incorporated, whilst also avoiding the abovementioned limitations. It is important to note that the applicant is not aware of any other piece of equipment which has similar technical, structural and formational characteristics to those described in the present application.

### Explanation of the invention

The connecting arm and the multicouplers object of the present invention make it possible to provide the connections required and/or recommended for usual machining headpieces and accessories in lathes.

Therefore, a first object of the invention is a retractable arm to provide multiple connections to machining headpieces and accessories in lathes, preferably horizontal lathes, according to claim 1.

A second object of the present invention is the multicoupler built into each machining headpiece and accessory, in which the connecting arm is connected when required by the machining operation to be carried out.

Both the connecting arm once automatically withdrawn and the storage unit in which the machining headpiece or accessory remains when it is not in use, are duly protected against coolant and shavings being projected from the ongoing machining operations, said storage unit being independent and sealed from the lathe, just in case they may later affect the correct connection of the headpieces and accessories in the lathe spindle as well as in the arm.

The arm, object of the present invention, has two positions, one resting position in which it can be found when its use is not required and one working or coupling position, when its functions are required. The arm moves between both positions automatically and is governed by a control system in the lathe. As already mentioned, said arm automatically travels from its resting position to its working position when it is required and it goes away automatically when it is not needed, in such a way that it does not interfere or limit the machining operations carried out with the machining spindle of the lathe or with the accessories which do not require additional connections to those that are already available in the main machining spindle of the lathe. Once in its resting position, the connections built into the arm are duly protected against coolant or shavings being projected as a result of the machining operations ongoing in the lathe.

The arm is preferably coupled to the main spindle or axle of the lathe at two ends, in such a way that one of its ends is preferably coupled to said spindle, from which the necessary supplies are obtained and the opposite end is free, in such a way that it may be coupled to the various accessories or headpieces which require it. As already mentioned, said arm contains the necessary channels to transmit electricity, power or coolant to said accessory or headpiece from the spindle of the lathe. The free end of the arm is coupled to a multicoupler device which is located in the accessory or headpiece.

The multicoupler consists of an existing connection in the accessories or headpieces which have additional or extra needs in order to function, such as an additional coolant or electrical, hydraulic or even mechanical connection in order to transmit movement. Said connection is achieved via contacts on the free end of the arm and via contracts arranged in the connection or multicoupler of the accessory or headpiece, in such a way that said additional needs are transmitted from the spindle or lathe to the headpiece or accessory. The contacts available in the multicoupler of the accessory or headpiece are coupled to the contacts arranged on the end of the arm, in such a way that said accessory or headpiece receives the required supply from the spindle or lathe.

The multicoupler which is built into each machining accessory or headpiece is protected against coolant and shavings being projected from the ongoing machining operations in the lathe, as is the accessory or headpiece, when the accessory or headpiece is withdrawn from the storage unit, owing to the fact that the storage unit is an area which is completely sealed off from the machining area of the lathe.

The piece of equipment aims to make additional connections available in addition to those built into the main machining spindle of the lathe, which are necessary and/or recommended for some machining accessories and headpieces which are coupled to the spindle of the lathe in order to carry out specific machining operations, such as coolant at high pressure or high flow, hydraulic connections to carry out various manoeuvres for changing tools on said machining accessories or headpieces or electrical connections to feed motors or electrical devices built into said headpieces or accessories. It is important to point out that the previous operations are carried out automatically and are controlled by the lathe control system.

### Description of the drawings

In order to complement the present description, with the aim of facilitating a better understanding of the invention characteristics, the present descriptive specification is accompanied by a set of drawings, which form an integral part of this description and serve as a non-limiting example thereof:
Figure 1 is a perspective view of a headpiece or accessory, which may be coupled to the main spindle of the lathe.
Figure 2 is a perspective representation of a coupling sequence (a, b, c) for coupling a headpiece or accessory to the lathe spindle and subsequently connecting the arm for automatic connections to said headpiece or accessory.
Figure 3 represents a tool coupled to the spindle, showing an arm for connections, which is also coupled.
Figure 4 is a lower perspective view of the arm moving towards or away from the accessory or tool.

### Preferred embodiment of the invention

The example of the present invention detailed herein describes an arm and a multicoupler for automatic connections to machining accessories in lathes.

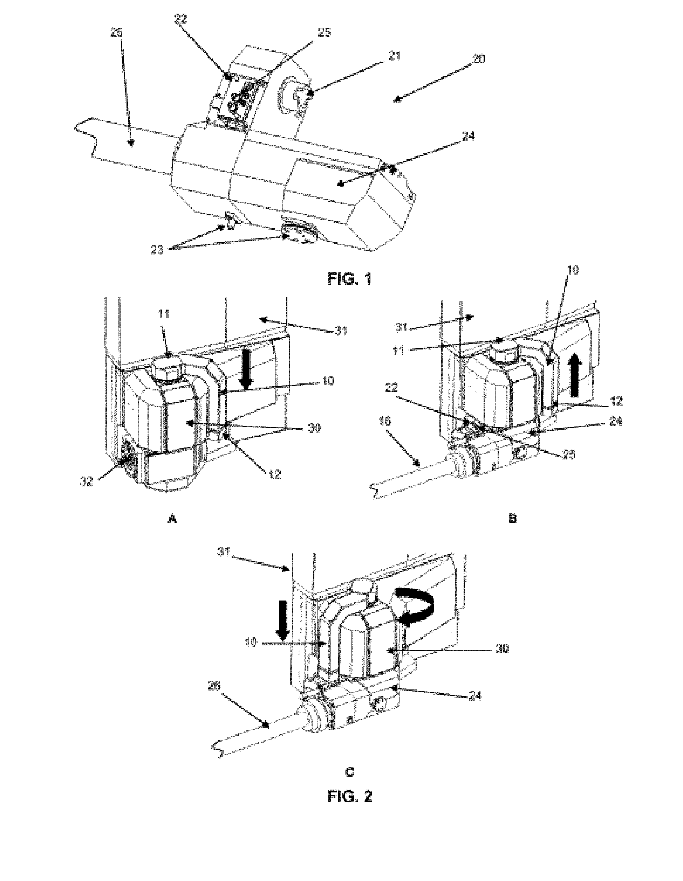

Figure 1 represents a headpiece or accessory 20 for the machining of pieces in a machine tool, preferably a horizontal lathe 31, which has a main body 24 upon which the various elements of the accessory or headpiece 20 are arranged. It particularly represents a coupling connection 21 to the main spindle or axle 32 of the lathe 31, via which the movement of the spindle 32 is transmitted to the accessory or headpiece 20 and in particular to the end 26 where the tool which will machine the piece is coupled. Said body also has anchoring elements 23 which are employed by a robot in order to move the headpiece or accessory between the machining area of the lathe and the sealed accessory, headpiece and tools storage unit. Said headpiece or accessory 20 comprises a multicoupler 22 formed by a connection which includes all those contacts 25 necessary for the accessory or headpiece to perform the special operations for which they were designed. Said contacts are used to connect various elements which enable the accessory or headpiece to run specific machining operations. Said contacts may serve, for example, to transmit coolant liquid at high pressure or high flow, hydraulic connections to carry out various tool changing manoeuvres on said machining accessories or headpieces or electrical connections to feed motors or electrical devices built into said headpieces or accessories.

In figure 2, a coupling sequence (A, B, C) can be observed which is for coupling an accessory or headpiece 20 to the spindle 30 of the lathe 31 before coupling said headpiece or accessory 20 to a connecting arm 10. The movements of the connecting arm 10 are represented by the arrows included in the figures. Said connecting arm 10 is composed of a channel or tube which inside, comprises various types of channels which run in its interior from the two ends to conduct electrical cables, coolant tubes and hydraulic connections and of air connections from one end to the other. A first end 11 of the arm 10 is coupled to the lathe 31 in such a way that, using the motor, which is preferably built into the first end or end of the coupling 11 of the arm 10 with the lathe 31, turns the arm 10. The second end or free end 12 of the arm has various contacts or connections 13 which represent the end of the channels running inside the arm 10. Said arm will comprise both channels and contacts 13 and headpieces or accessories 20 may be used in the lathe 31. Said arm 10 rotates from at least one resting position for coupling the arm 10 to the accessory or headpiece 20, in which the second end or free end 12 of the arm 10 comes into contact with the multicoupler 22 of the headpiece or accessory 20.

In sequence A of said Figure 2, the spindle 32 of the lathe 31 and the arm 10 coupled to the upper part of the spindle body 30 by means of the first end 11 of the arm 10 may be observed, the connecting arm 10 being in a resting position away from the spindle 32. Said first end 11, in addition to connecting the arm 10 to the various supplies (coolant, oil, air, electricity etc.,) through the lathe 31, results in the turning axle of the arm 10 between its at least two positions. In said resting position, the arm 10 is also descending in relation to the rotating axle cited, which also implicates an elevation and descent axle in the arm.

In the second sequence, the body 24 of the accessory or tool 20 which is coupled to the spindle 32 of the lathe 31 can be seen, wherein it has preferably been attached by means of a robot, which has translated from a sealed storage unit of the machining area of the lathe. Said headpiece or accessory 20 has a multicoupler 22, which comprises at least a contact 25 to receive the electrical cable, the refrigeration tube or the hydraulic or pneumatic connection which said headpiece or accessory 20 requires. Depending on the operations which may or should be carried out, the headpiece or accessory 20 and the multi coupler 22 will present a number of different contacts 25. In this second sequence B, the connecting arm 10 can be observed in its resting position but is elevated in relation to its previous position and preparing to turn. In this position the second end or free end 12 of the arm 10 is not in contact with the headpiece or accessory 20.

In the third and final sequence C, it is possible to see how the connecting arm 19 is coupled to the headpiece or accessory 20. Specifically, the arm 10 has travelled in a rotational manner, thanks to the motor arranged on its first stretch 11 which is in contact with the body of the spindle 20, from the previous resting position to the coupling position. Once in said coupling position, the second end 12 of the arm 10 will have descended and will have connected to the multicoupler 22 arranged in the accessory or headpiece 20, in such a way that the at least one contact 25 of the multicoupler 22 has been coupled to the corresponding contact 13 of the arm 10. In this way and if for example the accessory or headpiece 20 enables the coolant additional to the machining operation which is going to take place to be supplied, the contact 25 of the accessory or headpiece 20 will be connected to the channel 13, which exists to such end in the second end 12 of the connecting arm 10.

Once the machining operations of the lathe 31 require the accessory or headpiece 20 to be replaced, the arm 10 returns to its resting position following the steps described above in reverse order. The accessory or tool is firstly uncoupled by means of its elevation, in order to subsequently return to its resting position by turning, where is descends one again in order to secure said resting position.

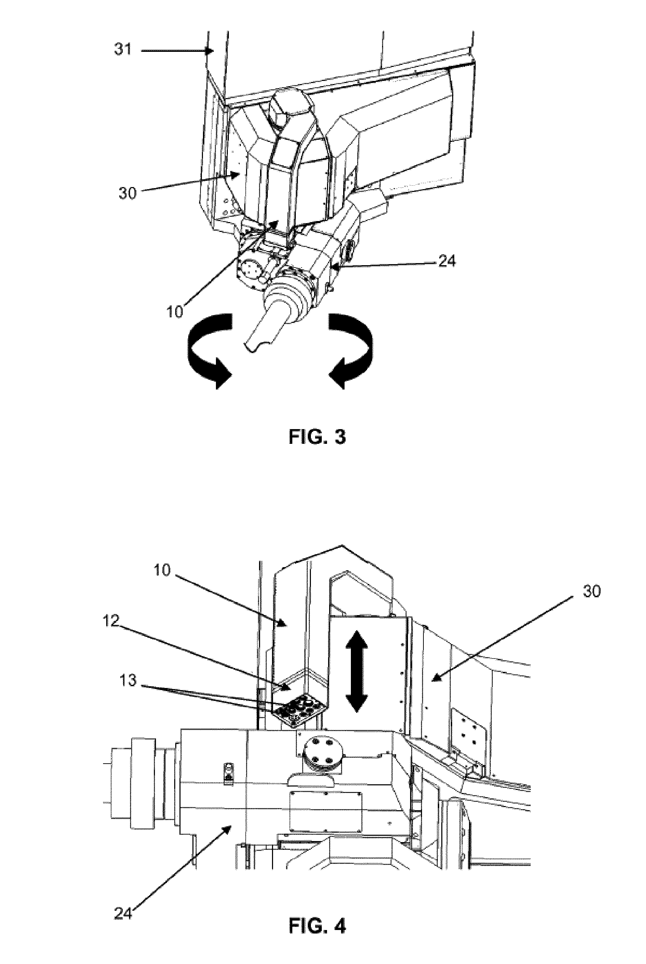

Figure 3 shows how the arm 10 facilitates intermediate positions between the two positions described above, depending on the movements of the spindle 32 in relation to the body of the same 30, which is fixed. In this way, the accessory or headpiece 20 turns, the tool 26 being able to orientate in the machining area, thus giving rise to the connecting arm 10 also turning without becoming uncoupled from the accessory or headpiece.

Figure 4 is a lower perspective view of an arm 10 which is coupled or uncoupled, descending or ascending, of an accessory or tool 20, wherein the contacts 13 of the arm 10 which facilitate access to the various channels that enable the various supplies to be transported can be observed. As already mentioned, the number of contacts 13 and channels in the arm 10 will depend on the design conditions of the lathe and the operations which may be carried out in the same, by means of using various accessories or tools 20.

## Claims

1. Connecting arm to be used in machine tools **characterised in that** it comprises at least one supply channel within, in order to automatically connect the machine tool to an accessory or headpiece coupled to the main axle of the machine tool.

2. Arm according to claim 1, **characterized in that** said arm is coupled to the machine tool and is moved in a rotational manner between at least two positions, one resting position and one coupling or connection position for connection to the accessory or headpiece.

3. Arm according to previous claims, **characterised in that** it comprises two ends, a first end at which the arm is coupled to the machine tool and a second for coupling to the accessory or headpiece, said at least one channel running between the first end and the second end.

4. Arm according to claim 3, **characterized in that** said at least one end has at least one contact to connect to the accessory or headpiece.

5. Arm according to previous claims, **characterised in that** said at least one channel houses electronic cables and/or coolant tubes and/or hydraulic and/or pneumatic conducts.

6. Arm, according to previous claims, **characterised in that** the machine tool is a horizontal lathe.

7. Multicoupler, to be used in an accessory or headpiece which may be coupled to a main spindle or axle of a machine tool, **characterized in that** it comprises contacts to connect to an arm, according to claims 1 to 5.
